(19) Europäisches Patentamt
European Patent Office
Office européen des brevets

(11) **EP 3 089 383 B1**

(12) **EUROPEAN PATENT SPECIFICATION**

(45) Date of publication and mention
of the grant of the patent:
**16.08.2017 Bulletin 2017/33**

(51) Int Cl.:
***H04B 10/61*** *(2013.01)*      *H04B 10/516* *(2013.01)*

(21) Application number: **15305665.0**

(22) Date of filing: **30.04.2015**

(54) **METHOD AND APPARATUS FOR ESTIMATING PHASE OF PHASE-MODULATED OPTICAL SIGNALS**

VERFAHREN UND VORRICHTUNG ZUR SCHÄTZUNG PHASENMODULIERTER OPTISCHER SIGNALE

PROCÉDÉ ET APPAREIL D'ESTIMATION DE PHASE DE SIGNAUX OPTIQUES MODULÉS EN PHASE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.11.2016 Bulletin 2016/44**

(73) Proprietor: **ALCATEL LUCENT**
**92100 Boulogne-Billancourt (FR)**

(72) Inventors:
 • **BUCHALI, Fred**
   **70435 Stuttgart (DE)**
 • **IDLER, Wilfried**
   **70435 Stuttgart (DE)**

(74) Representative: **Wetzel, Emmanuelle et al**
**Alcatel-Lucent**
**Intellectual Property Business Group**
**70430 Stuttgart (DE)**

(56) References cited:
**EP-A1- 2 747 311      US-A1- 2011 274 442**
**US-A1- 2014 133 865**

 • **CURRI V ET AL: "Time-division hybrid modulation formats: Tx operation strategies and countermeasures to nonlinear propagation", OFC 2014, OSA, 9 March 2014 (2014-03-09), pages 1-3, XP032633416, DOI: 10.1109/OFC.2014.6886929 [retrieved on 2014-08-27]**

## Description

The present document relates to phase estimation apparatuses. In particular, the present document relates to phase estimation of a phase-modulated optical signal using super-symbols including at least two different modulation formats. Conventional modulation formats are applied today for transmitting optical signals e.g. in optical transport networks. These formats are, for example, BPSK (binary phase shift keying), QPSK (quadrature phase shift keying), 16QAM (QAM: Quadrature Amplitude Modulation), 8QAM and others. Recently, time division multiplexed hybrid modulation formats have been proposed to reduce the gaps in spectral efficiency of the regular modulation formats.

Due to frequency/phase offsets and instabilities caused by the mismatch of carrier frequency oscillators between transmitter and receiver in a non-ideal communication system, the constellation of the received signal might be rotated by a time-varying angle. In order to allow coherent demodulation, information in the received signal may be used to estimate the frequency and phase variations to reproduce or recover the carrier signal at the receiver. Phase estimation is applied to compensate for such frequency/phase mismatch resulting in a controlled rotation of the received constellation.

An issue for some modulation formats is the low difference in angle of adjacent constellation points. Especially in case of high noise and nonlinear interaction by neighboring channels, this may lead to slips of the phase leading to a rotation of the constellation in the receiver by e.g. 90° and multiples of that, which may be compensated by digital signal processing or FEC (forward error correction).

The compensation of phase slips can be performed by a DSP (digital signal processor) (for example by using pilot assistance or differential coding) or by special implementations of the FEC (forward error correction). For compensation of phase slips, a separate margin in OSNR (optical signal-to-noise ratio) is required, leading to a reduction of overall sensitivity. Another technique to compensate for phase slips is based on the insertion of unmodulated pilot symbols. The processing of these symbols is straight forward. Nevertheless, the insertion of pilots leads to a reduction of net data rate which has to be compensated by an increased gross rate. For example, in case of pilot symbols insertion every 100 symbols, the line rate is increased by 1%. As the pilots occur very seldom, averaging over pilots is less feasible because of the high delay between them.

A phase estimation apparatus according to the state of the art is known from EP-A-2747311.

It is an objective of the present disclosure to provide a phase estimation apparatus, respectively, a phase estimation method which significantly reduces the occurrence of phase slips to be eliminated by the optical receiver.

According to a first aspect, a phase estimation apparatus is disclosed which is configured to estimate the phase of a received optical signal including a phase-modulated data signal. The optical signal may be received from an optical link of an optical network, e.g. an optical transport network. The apparatus comprises an electrical interface for receiving an electrical representation of said phase-modulated data signal. In other words, the phase-modulated data signal is provided to the electrical interface in the electrical domain e.g. after optical processing and optical/electrical conversion. The phase-modulated data signal comprises super-symbols covering at least two time slots, each super-symbol including at least a first data signal modulated by a first phase modulation format in a first time slot and a second data signal modulated by a second phase modulation format in a second time slot. So, the phase-modulated data signal comprises a hybrid modulation format including data signals being modulated by multiple different modulation formats based on a time division multiplex scheme.

It must be noted that the first and second phase modulation formats may also modulate further signal properties than phase such as e.g. amplitude.

The phase estimation apparatus further comprises a demultiplexing unit being adapted to split the phase-modulated data signal into a first signal path comprising the first data signal and a second signal path comprising the second data signal. In case that more than two modulation formats are used, multiple modulation formats can be processed within a single signal path or more than two signal paths may be provided for processing said different modulation formats. In said first signal path, a first modulation removal unit is included and a second modulation removal unit is included in the second signal path. Said first modulation removal unit is adapted to remove or reduce the modulation format of the first data signal thereby providing a modified first data signal. Said removal or elimination of modulation format may be obtained by applying a mathematical operation on complex data values included in or derived from the first data signal. Similarly, said second modulation removal unit is adapted to remove or reduce the modulation format of the second data signal thereby providing a modified second data signal. Said modified second data signal may be also derived by applying a mathematical operation on complex data values included in or derived from the second data signal.

In addition, the phase estimation apparatus comprises a phase estimation unit being adapted to provide a phase estimation signal for the entire super-symbol based on the modified first and second data signals. In other words, the data signals provided by both signal paths comprising different modulation formats are used for estimating the phase of the hybrid modulated data signal including upper-mentioned super-symbols.

Phase estimation allows for compensation of frequency/phase mismatch between transmitter and receiver and results in a controlled rotation of the received constellation. Suitable algorithms for estimating the carrier phase from received complex data values may be derived from a "blind" method which applies a non-linear operation to the received signal, e.g. the received modulated signal is raised to the second or fourth power for BPSK or QPSK signals, respectively. This non-linear operation removes data phase of the received modulated signal. The carrier phase is then computed (e.g. by determining the phase of the non-linearly treated data values) and subtracted from the phase of the received signal to correct and/or recover the data phase of the received modulated signal.

The suggested phase estimation apparatus is advantageous because, by using information provided by multiple data signals comprising different modulation formats, the risk of phase slips can be significantly reduced because depending on the optical channel properties (e.g. high noise, nonlinear interaction) one of said data signals may ensure a reliable phase estimation process thereby avoiding phase slips.

According to embodiments, the first phase modulation format comprises binary phase-shift keying (BPSK) or another phase modulation format (e.g. 8QAM) comprising a phase ambiguity of 180°. A phase modulation format comprising an ambiguity of 180° may be less prone to phase slips, especially in cases of high nonlinear optical channels. So using, for example, BPSK modulation format within the hybrid modulated data signal clearly enhances the robustness of the phase estimation apparatus.

According to embodiments, the second phase modulation format comprises quadrature phase shift keying (QPSK) or another phase modulation format comprising a phase ambiguity of 90°. QPSK provides a higher bit rate as BPSK referring to the same symbol rate. In addition, in case of noise-limited environments, QPSK may provide better phase estimation results than BPSK. Therefore, the usage of QPSK or - in general words - the usage of a phase modulation format comprising a phase ambiguity of 90° improves the phase estimation process.

According to embodiments, the first modulation removal unit comprises processing means for squaring complex data included in the first data signal. As mentioned before, the first data signal may be a BPSK modulated signal or another phase modulation format comprising a phase ambiguity of 180°. By squaring complex data of such data signal, all constellation points representing said complex data are mapped onto one or more constellation points having the same phase (under ideal conditions, no noise, no nonlinear actions) which are used for further phase estimation processing.

According to embodiments, the second modulation removal unit comprises processing means for calculating the fourth power of complex data included in the second data signal. As mentioned before, the second data signal may be a QPSK modulated signal or another phase modulation format comprising a phase ambiguity of 90°. By applying the fourth power to complex data of such data signal, all constellation points representing said complex data are mapped onto one or more constellation points having the same phase (under ideal conditions, no noise, no nonlinear actions) which are used for the further phase estimation processing.

In general, other power operations may be applied by the first and second modulation removal units, according to the applied modulation formats. For example, power of 3 may be applied for 3QAM and power of 8 for 8PSK.

According to embodiments, the first and second signal path includes an averaging filter for averaging complex data included in the modified first and second data signals. For example, said averaging filter may be a sliding window filter. Thereby, the influence of noise and nonlinearities on the phase estimation process can be significantly reduced.

According to embodiments, the first signal path includes an adaption unit being coupled with the averaging filter of the first signal path and receiving the averaged complex data for the first signal path generated by the averaging filter. Said adaption unit may be adapted to adjust the complex values of the modified first data signals to the complex values of the modified second data signals. Depending on the modulation formats included in the hybrid modulated data signal, the mathematical operation applied by upper-mentioned processing means to complex data values in the first signal path is different to the mathematical operation applied by upper-mentioned processing means to complex data values in the second signal path. In order to avoid a structural unequal treatment of phase information derived from said different signal paths, the adaption unit applies a further mathematical operation to the complex data processed in the first signal path. For example, the adaption unit may square the complex data provided by the averaging filter in order to compensate for the fourth power operation applied to complex data in the second signal path.

According to embodiments, a correction unit is provided, said correction unit being adapted to receive phase information of complex data included in the modified first and modified second data signals or phase information of complex data derived from said modified first and modified second data signals, determine the phase difference between said phase information and change the phase of complex data included in the first or second signal path based on said phase difference. Due to the usage of different modulation formats in the first and second signal paths, there may be a phase difference of structural nature, i.e. a phase difference according to a certain phase grid. Phase difference in the present context does not mean slight deviations due to phase shifts but phase shifts with a fixed phase step width. Said phase shift may be compensated by the correction unit in order to avoid a detrimental impact of said phase shift on the phase estimation process. In embodiments, the correction unit is only active during startup to determine the phase shift for compensation during operation of the phase estimation apparatus.

According to embodiments, the correction unit is adapted to round the phase difference to a correction angle $\rho_{comp}$ and add said correction angle $\rho_{comp}$ to the phase of complex data included in the first or second signal path. For example, the value of the correction angle $\rho_{comp}$ may be defined by:

$$\rho_{comp} = n \cdot \pi; n \in Z;$$

In other words, the correction angle may be an integer multiple of 180°, i.e. the correction angle may comprise values according to [0°, 180°]. Thereby, structural-caused phase shifts between complex data of the first and second signal paths can be remedied. In other embodiments, the correction angle may be different, e.g. an integer multiple of 90°, depending on the applied modulation formats.

According to embodiments, the first and/or second signal path comprises a weighting entity, said weighting entity being adapted to multiply the complex data included in the respective signal path with a weighting factor. By means of said at least one weighting entity, the influence of complex data provided by the respective signal paths on the subsequent phase estimation can be changed. For example, in case of noise limited environments, information provided by the second signal path (including QPSK- signal or a signal with another phase modulation format comprising a phase ambiguity of 90°) might by overweighted, whereas in environments being limited by nonlinearities, information provided via the first signal path (including BPSK- signal or a signal with another phase modulation format comprising a phase ambiguity of 180°) may be overweighted. The weights may be constant or variable, e.g. adaptive.

According to embodiments,- before providing the first and second data signals to the phase estimation unit - the complex data included in the first and second data signals are combined or superimposed. By means of said combination or superposition, the phase information provided by both signal paths is joined. For example, said combination or superposition may be provided by summing up complex data provided via the first and second signal path to a summation point e.g. by means of an adding unit.

According to a second aspect, an optical receiver for receiving an optical signal including a phase-modulated data signal is disclosed. The receiver comprises a phase estimation apparatus according to anyone of the embodiments described before. The receiver may further comprise a phase compensation unit for compensating the phase of the received optical signal or of the phase-modulated data signal based on the phase estimation signal provided by the phase estimation apparatus. The phase compensation may be applied in the optical or the electrical domain. The optical receiver may further comprise a signal converting unit that converts the optical signal received from an optical link of an optical network, e.g. an optical transport network, into a corresponding electrical signal, i.e. an electrical representation of said optical signal. In the electrical domain, the electrical signal is then sampled and digitized by an analog-to-digital (A/D) converter, which is followed by a digital signal processing (DSP) unit for further data processing such as aforementioned phase estimation and phase compensation.

According to embodiments, the optical receiver comprises a receiving unit being adapted to recover information included in super-symbols of the phase-modulated data signal. The receiving unit may be adapted to recover the super-symbols based on the phase estimation signal provided by the phase estimation apparatus. For example, the receiving unit may demodulate a super-symbol by applying an appropriate first demodulation function to the first data signal modulated by the first phase modulation format and applying an appropriate second demodulation function to the second data signal modulated by the second phase modulation format. The first and second demodulation functions correspond to the first phase modulation format and the second phase modulation format, respectively.

According to a third aspect, a method for estimating the phase of a phase-modulated data signal included in an optical signal is disclosed. The method comprises the steps of:

- receiving an electrical representation of a phase-modulated data signal, said phase-modulated data signal comprising super-symbols covering at least two time slots, each super-symbol including at least a first data signal modulated by a first phase modulation format in a first time slot and a second data signal modulated by a second phase modulation format in a second time slot;
- splitting the phase-modulated data signal into a first signal path comprising the first data signal and a second signal path comprising the second data signal;
- removing or reducing the modulation format of the first data signal thereby providing a modified first data signal;
- removing or reducing the modulation format of the second data signal thereby providing a modified second data signal; and
- estimating the phase of the phase-modulated data signal based on the modified first and second data signals.

The data processing described before may be at least partially realized in one or more digital signal processors (DSPs).

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner. Further, if not explicitly indicated otherwise, embodiments of the invention can be freely combined with each other.

The invention is explained below in an exemplary manner with reference to the accompanying drawings, wherein

Fig. 1    schematically illustrates an example hybrid-modulated data signal with super-symbols comprising QPSK and BPSK data signals;

Fig. 2    schematically illustrates the hybrid-modulated data signal of Fig. 1 in a further representation;

Fig. 3    schematically illustrates the process of eliminating QPSK modulation format by raising complex data to the fourth power;

Fig. 4    schematically illustrates the process of eliminating BPSK modulation format by squaring complex data;

Fig. 5    schematically illustrates an example hybrid-modulated data signal including QPSK and phase-shifted BPSK signals;

Fig. 6    schematically illustrates an example hybrid-modulated data signal including 8QAM, QPSK and BPSK data signals;

Fig. 7    schematically illustrates a phase estimation apparatus with multiple signal paths for deriving a phase estimation signal based on a hybrid-modulated data signal according to a first embodiment; and

Fig. 8    schematically illustrates a phase estimation apparatus with multiple signal paths for deriving a phase estimation signal based on a hybrid-modulated data signal according to a second embodiment.

In a broad sense, the basic idea of the present disclosure is to apply hybrid modulation formats to reduce the probability of phase slips. Hybrid modulation formats are based on a combination of formats multiplexed in the time domain. For example, pure QPSK has a difference in phase angle of 90° between two adjacent constellation points and ambiguity of four, whereas pure BPSK has a phase difference of 180° between adjacent constellation points and ambiguity of two. Thus, BPSK has a doubled tolerance to phase noise. We propose to apply a combination of modulation formats with ambiguity of four, like QPSK, and modulation formats with ambiguity of two, like BPSK. The combination may lead to a reduction of the mean number of bits per symbol which can be compensated, if necessary, by increased symbol rate or by applying symbols having a more complex ambiguity (i.e. carrying more bits of information).

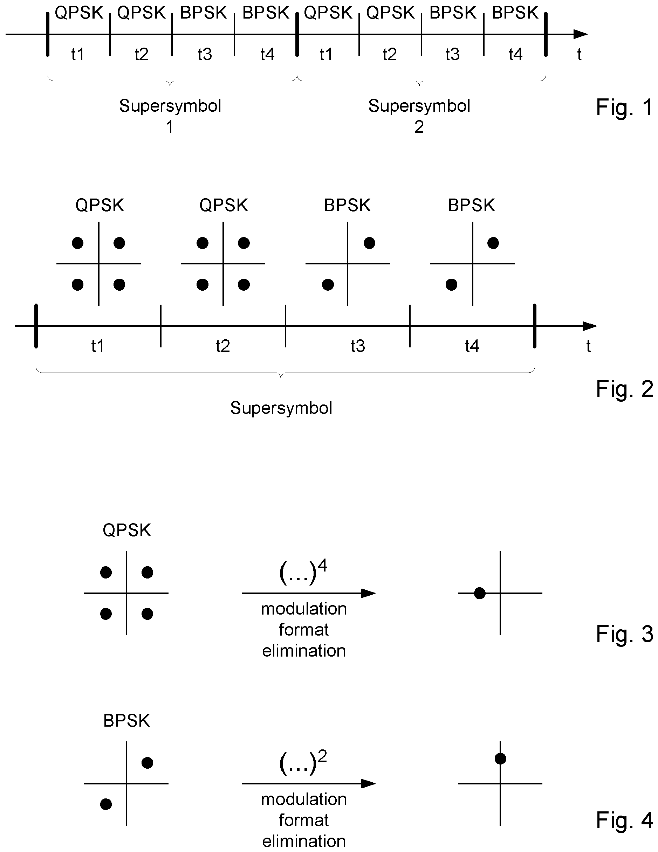

Fig. 1 and 2 schematically illustrate the structure of an optical signal comprising a phase-modulated data signal in time domain. The optical signal comprises multiple super-symbols which are transmitted consecutively. Said super symbols carry the information to be transmitted from an optical transmitter to a corresponding optical receiver. Each super-symbol may comprise multiple time slots, said time slots including phase-modulated data signals. More in detail, each super-symbol may comprise multiple data signals, said data signals being modulated by at least two different phase modulation formats. In the present example, the super symbol comprises four time slots wherein the data signals included in the time slots are modulated by two different modulation formats. In order to improve phase-slip robustness of the optical receiver, the super-symbol may comprise phase-modulation formats with different ambiguity, for example, a first phase modulation format with an ambiguity of four, i.e. a phase angle difference of 90° between two adjacent constellation points, and a second phase modulation format with an ambiguity of two, i.e. a phase angle difference of 180° between two adjacent constellation points. For example, said first modulation format may be QPSK and said second modulation format may be BPSK. Also other modulation formats may be possible, e.g. quadrature amplitude modulation (QAM), for example, 8QAM etc.

Fig. 3 and 4 schematically illustrate a mathematical algorithm for eliminating phase modulation of a QPSK and BPSK signal. Said mathematical algorithm may be used, for example, in a Viterbi decoder. By applying the fourth power to the QPSK data signal, the different phases of constellation points are mapped to a single point with a certain phase which may be used for phase estimation. Similarly, different constellation points of a BPSK signal may be mapped to a single constellation point by squaring the complex values of the BPSK data signal. The phase of the BPSK signal may be estimated by determining the phase of said single point.

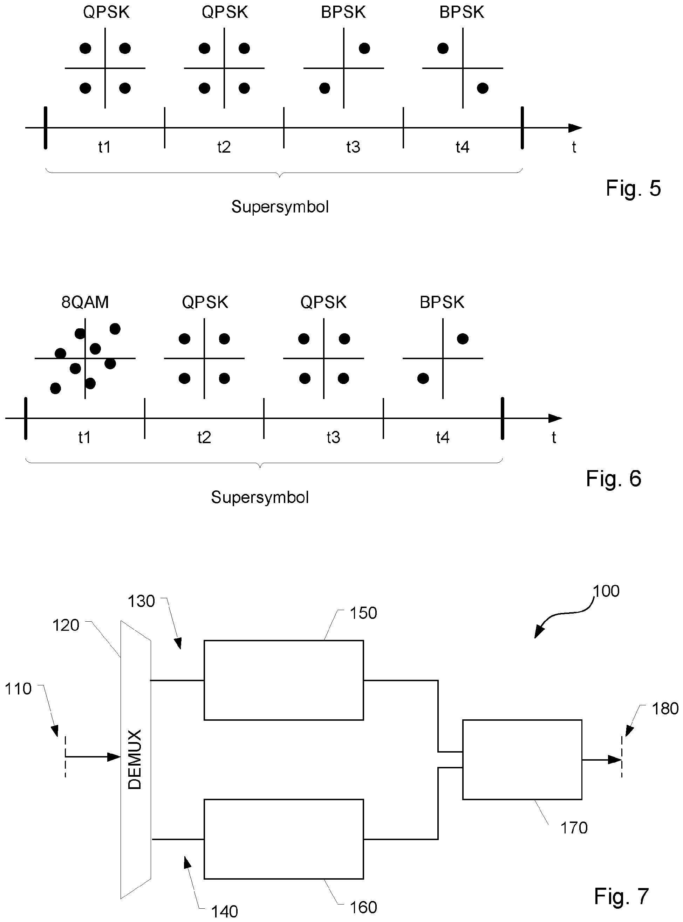

Fig. 5 and 6 show further examples of optical signals comprising super-symbols with a hybrid modulation format. The super-symbols of the optical signal according to Fig. 5 comprise a pair of QPSK time slots and a pair or BPSK time slots. In contrary to the example of Fig. 2, the BPSK signals are rotated by an angle of 90° in order to maintain the symmetry within the super-symbol. The embodiment of Fig. 6 shows a super-symbol including three different modulation formats, namely 8QAM (timeslot t1), QPSK (time slots t2, t3) and BPSK (time slot t4). In comparison to a pure QPSK data signal, the optical signal according to Fig. 2 or 5 may comprise a lower data rate because of the lower data rate of the BPSK data signal. By including a modulation format with a higher data rate, the data rate of the hybrid modulation format signal may be enhanced. For example, the usage of 8QAM signal is advantageous because 8QAM signal comprises a main phase ambiguity of 180° due to the extended diagonal line from bottom left to top right. In other words, by squaring the complex data values corresponding to the respective constellation points, the modulation format is not totally eliminated but mitigated such that a phase estimation based on the phase of the squared complex data values is possible and reliable. In addition, the size or scaling of the different modulated symbols may be same or adapted to improve theoretical capacity or phase estimation accuracy.

Fig. 7 shows an example embodiment of a phase estimation apparatus 100. The phase estimation apparatus 100 comprises an electrical interface 110 for receiving an electrical representation of said phase-modulated data signal. In other words, the phase-modulated data signal is provided to the phase estimation apparatus 100 in the electrical domain. Said phase-modulated data signal comprises a hybrid-modulated data signal including super-symbols as described before with respect to Fig. 1, 2, 4 or 5. The phase estimation apparatus 100 comprises a demultiplexing unit 120 which splits the hybrid-modulated data signal into at least two signal paths, according to the present embodiment a first signal path 130 and a second signal path 140. For example, the first signal path 130 may include data signals modulated by a first modulation format which may comprise a phase ambiguity of 180°, e.g. BPSK or 8QAM, and the second signal path 140 may include data signals modulated by a second modulation format which may comprise phase ambiguity of 90°, e.g. QPSK. In case of using multiple different modulation formats with 180° phase ambiguity in said super-symbols, said modulation formats may be processed in the same signal path 130.

The first signal path 130 comprises a first modulation removal unit 150 which may be adapted to remove or mitigate modulation formats having a phase ambiguity of 180°. More in detail, the phase ambiguity may be eliminated or mitigated by squaring the complex data signals transmitted via the first signal path 130. By means of said squaring, the amplitude of the complex data is also squared, whereas the phase is doubled. Thereby, the phase of the complex data values is mapped to a single complex data value (under ideal conditions, i.e. no noise, no non-linear distortions etc.)

Similarly, the second signal path 140 includes a second modulation removal unit 160 adapted to remove or mitigate modulation formats having a phase ambiguity of 90° (e.g. QPSK). The phase ambiguity may be eliminated or mitigated by raising complex data values to the fourth power. Thereby, in case of ideal conditions, the phase of the complex data values is mapped to a complex data value comprising a single phase.

The outputs of the modulation removal units 150, 160 may be coupled with a phase estimation unit 170. Said phase estimation unit 170 may receive the complex first and second data signals modified by the respective modulation removal units 150, 160 or data signals derived from said modulation removal units 150, 160, and provide a phase estimation signal based on the complex data values of the first and second signal path at an output 180. By estimating the phase of a phase-modulated data signal based on at least two different complex data signals which have been modulated by different modulation formats, the robustness of the phase estimation against phase slips is significantly improved and effort for compensating phase slips can be significantly reduced. In addition, improvements regarding the sensitivity of an optical receiver including said phase estimation apparatus, regarding the required hardware resources and regarding the power consumption can be achieved.

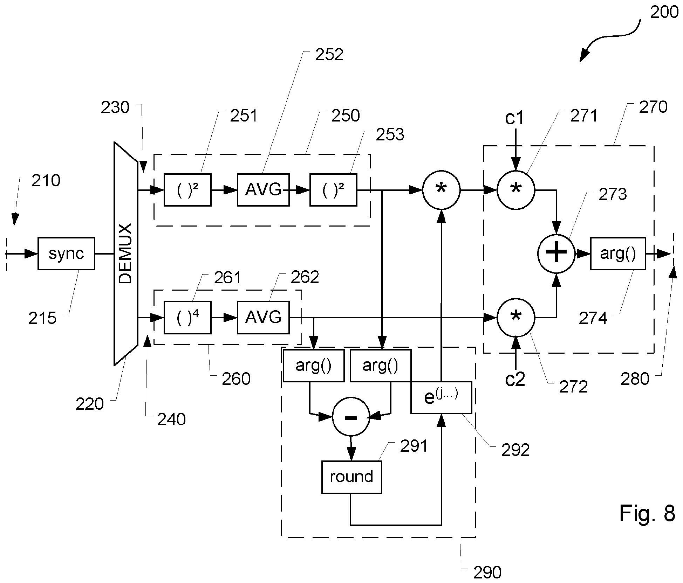

Fig. 8 shows a phase estimation apparatus 200 similar to the phase estimation apparatus 100 of Fig. 7 in closer detail. The phase estimation apparatus 200 comprises a demultiplexing unit 220 being adapted to receive a phase-modulated data signal in the electrical domain from an electrical interface 210. Between the electrical interface 210 and the demultiplexing unit 220, a synchronizing unit 215 may be included which may be adapted to provide synchronized super-symbols to the demultiplexing unit 220. Similar to the embodiment of Fig. 7, the demultiplexing unit 220 splits the received phase-modulated data signal into at least a first and a second signal path 230, 240, wherein the first signal path 230 may include data signals modulated by a first modulation format which may comprise a phase ambiguity of 180°, e.g. BPSK or 8QAM and the second signal path 240 may include data signals modulated by a second modulation format which may comprise a phase ambiguity of 90°, e.g. QPSK.

The first signal path 230 includes a first modulation removal unit 250 which may receive the complex data values provided by the demultiplexing unit 220. The modulation removal unit 250 may comprise processing means 251 receiving said complex data values of the demultiplexing unit 220. Said processing means 251 may be adapted to square the received complex data values for eliminating or mitigating the modulation format (cf. Fig. 4). After squaring said complex data values, the obtained complex data values are provided to an averaging filter 252. Said averaging filter 252 may apply a filter function to the received squared complex data values thereby providing one or more average complex values based on a plurality of complex values. For example, the averaging filter 252 may be a sliding window filter. In addition, the modulation removal unit 250 may comprise an adaption unit 253 which may be adapted to adjust the complex data values processed in the first signal path 230 to the complex data values processed by the second signal path 240. More in detail, as described in greater detail below the modulation removal unit 260 comprised in the second signal path 240 may raise the complex data values to the fourth power in order to eliminate or mitigate the modulation format having a phase ambiguity of four. In order to avoid an overweighting of the complex data values provided via the second signal path 240, the complex data values provided by the averaging filter 252 may be squared by the adaption unit 253, thereby equalizing the weighting of the complex data values of the first and second signal path 230, 240.

Similarly, the second signal path 240 comprises a second modulation removal unit 260 being adapted to remove or mitigate the modulation format of the second data signal provided in said second signal path 240. The modulation removal unit 260 may comprise processing means 261 for raising the complex data values of the second data signal provided via the second signal path 240 to the fourth power. Thereby, the modulation format of a phase-modulated data signal having a phase ambiguity of four can be removed (cf. Fig. 3). The output of the processing means 261 may be coupled with an averaging filter 262. Said averaging filter 262 may receive the complex data values provided by the processing means 261 and may apply a filter function to the received squared complex data values thereby providing an average complex value based on a plurality of complex values. For example, the averaging filter 262 may be a sliding window filter.

The averaging filters 252, 262 may be of constant length or variable in length. For example, the filter length may be adaptive and determined based on conditions of the received optical signal.

The phase estimation apparatus 200 may further comprise a correction unit 190. The correction unit 290 may be adapted to remove phase mismatches according to a certain phase grid between the complex data values provided by the first and second modulation removal unit 250, 260. Said phase mismatches may result from different phase granularities of the modulation formats included in the super-symbols. For example, after passing the modulation removal units 250, 260, the complex data values provided by the respective modulation removal units 250, 260 may comprise a phase difference of $n \cdot \frac{\pi}{2}$ or close to $n \cdot \frac{\pi}{2}$, wherein n is an integer. The correction unit may be adapted to remedy said structural phase mismatch by adjusting the phase of the complex data values transmitted in the first or second signal path 230, 240. More in detail, the correction unit 290 may determine the phase of the complex data values provided by the first and second modulation removal unit 250, 260 and determine the difference between the phases of the complex data values. The result may be provided to a rounding entity 291. Said rounding entity 261 may be adapted to round the received phase difference to a correction angle, in the following also referred to as phase compensation value represented by $n \cdot \frac{\pi}{2}$, wherein n is an integer. Said phase compensation value may be forwarded to a phase adaption unit 292. Said phase adaption unit 292 may be adapted to provide a compensating complex data value comprising a phase according to the phase compensation value. The complex data values provided by the first modulation removal unit 250 may be multiplied with said compensating complex data value in order to provide phase correction.

The modified first and second data signals (modified by the modulation removal units 250, 260 and - in case of the first signal path- modified by the correction unit 290) are provided to the phase estimation unit 270.

The phase estimation unit 270 may be adapted to estimate the phase based on phase information provided via the first and second signal path 230, 240. In order to be able to adjust the influence of a certain data signal on the phase estimation process, each signal path 230, 240 may comprise a weighting entity, i.e. the first signal path 230 comprises a first weighting entity 271 and the second signal path comprises a second weighting entity 272. Each weighting entity 271, 272 may receive a weighting factor (weighting factor c1 associated with the first weighting entity 271 and weighting factor c2 associated with the second weighting entity 272). Each weighting entity 271, 272 is adapted to multiply the data signal with said weighting factors c1, c2. Depending on the relative size of the weighting factors c1, c2, the weighting of complex data values provided via the respective signal paths 230, 240 may be varied. For example, if c1 = c2, there is an equal weighting of complex data values. If c1>c2, the weighting of complex data values provided via the first signal path 230 is overweighted. For example, in noise-limited transmission scenarios, the second signal path 240 processing QPSK signals may be overweighted. In nonlinearity-limited transmission scenarios, the first signal path 230 processing BPSK may be overweighted because nonlinearities have strong detrimental influence on the phase of the transmitted data signal and BPSK modulation scheme is more robust against phase slips due to the phase granularity of 180°.

After passing the weighting entities 271, 272, the complex data signals may be superimposed by a summation entity 273. Thereby, phase information included in the complex data signals provided via the first and second signal path are combined. After superposition, the phase of the complex data signal is determined by a phase determination unit 274, thereby deriving a phase estimation signal which is provided at output 280. It is worth mentioning that the phase estimation signal can be derived also in various ways, e.g. by determining the phase of complex data signals in each signal path 230, 240, weighting said phases by weighting factors c1, c2 and determining the mean value between said weighted phases.

The phase estimation signal may be used in an optical receiver for determining the phase of the phase-modulated data signal including said super-symbols. Thereby, the likelihood of occurrence of phase slips due to phase noise and/or nonlinear distortions can be significantly decreased. In addition, the forward error control which might handle said phase slips in other implementations can be significantly simplified. For example, differential coding can be avoided which leads to a reduction in hardware effort and power consumption, respectively, an improvement of sensitivity.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, the explicit use of the term "processor" or "computer" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random-access memory (RAM), and non-volatile storage. Other hardware, conventional and/or custom, may also be included.

## Claims

1. Phase estimation apparatus adapted to estimate the phase of an optical signal including a phase-modulated data signal, the apparatus comprising:

   - an electrical interface (110, 210) adapted to receive an electrical representation of said phase-modulated data signal, said phase-modulated data signal comprising super-symbols covering at least two time slots, each super-symbol including at least a first data signal modulated by a first phase modulation format in a first time slot and a second data signal modulated by a second phase modulation format in a second time slot;

   said phase estimation apparatus **characterized by**:

   - a demultiplexing unit (120, 220) being adapted to split the phase-modulated data signal into a first signal path (130, 230) comprising the first data signal and a second signal path (140, 240) comprising the second data signal;
   - a first modulation removal unit (150, 250) included in the first signal path (130, 230) and a second modulation removal unit (160, 260) included in the second signal path (140, 240), said first modulation removal unit (150, 250) being adapted to remove or reduce the modulation format of the first data signal thereby providing a modified first data signal and said second modulation removal unit (160, 260) being adapted to remove or reduce the modulation format of the second data signal thereby providing a modified second data signal; and
   - a phase estimation unit (170, 270) being adapted to provide a phase estimation signal for a super-symbol based on the modified first and second data signals.

2. Apparatus according to claim 1, wherein the first phase modulation format is binary phase-shift keying (BPSK) or another phase modulation format comprising a phase ambiguity of 180°.

3. Apparatus according to anyone of the preceding claims, wherein the second phase modulation format is quadrature phase shift keying (QPSK) or another phase modulation format comprising a phase ambiguity of 90°.

4. Apparatus according to anyone of the preceding claims, wherein the first modulation removal unit (250) comprises processing means (251) for squaring complex data included in the first data signal.

5. Apparatus according to anyone of the preceding claims, wherein the second modulation removal unit (260) comprises processing means (261) for calculating the fourth power of complex data included in the second data signal.

6. Apparatus according to anyone of the preceding claims, wherein the first and/or second signal path (230, 240) includes an averaging filter (252, 262) for averaging complex data included in the modified first and second data signals.

7. Apparatus according to anyone of the preceding claims, wherein the first signal path (230) includes an adaption unit (253) being coupled with the averaging filter (252) of the first signal path (230), said adaption unit (253) being adapted to adjust the complex values of the modified first data signals with regards to the complex values of the modified second data signals.

**8.** Apparatus according to anyone of the preceding claims, comprising a correction unit (290), said correction unit (290) being adapted to receive phase information of complex data included in the modified first and modified second data signals or phase information of complex data derived from said modified first and modified second data signals, determine the phase difference between said phase information and change the phase of complex data included in the first or second signal path based on said phase difference.

**9.** Apparatus according to claim 8, wherein the correction unit (290) is adapted to round the phase difference to a correction angle $\rho_{comp}$ and add said correction angle $\rho_{comp}$ to the phase of the complex data of the first or second signal path (230, 240), wherein the value of the correction angle $\rho_{comp}$ is defined by:

$$\rho_{comp} = n \cdot \pi; n \in Z;$$

**10.** Apparatus according to anyone of the preceding claims, wherein the first and/or second signal path (230, 240) comprises a weighting entity (271, 272), said weighting entity (271, 272) being adapted to multiply the complex data included in the respective signal path with a weighting factor (c1, c2).

**11.** Apparatus according to anyone of the preceding claims, wherein - before providing the first and second data signals to the phase estimation unit (170, 270) - the complex data included in the first and second data signals are combined or superimposed.

**12.** Apparatus according to claim 11, wherein the complex data included in the first and second data signals are combined or superimposed by adding the complex data of the first and second data signals.

**13.** Optical receiver for receiving optical signals including a phase-modulated data signal, the receiver comprising a phase estimation apparatus (100, 200) according to anyone of the preceding claims.

**14.** Optical receiver according to claim 13, comprising a receiving unit being adapted to recover information included in super-symbols of the phase-modulated data signal, wherein the receiving unit is adapted to recover the super-symbols based on the phase estimation signal provided by the phase estimation apparatus (100, 200).

**15.** Method for estimating the phase of a phase-modulated data signal included in an optical signal, the method comprising the steps of:

- receiving an electrical representation of a phase-modulated data signal, said phase-modulated data signal comprising super-symbols covering at least two time slots, each super-symbol including at least a first data signal modulated by a first phase modulation format in a first time slot and a second data signal modulated by a second phase modulation format in a second time slot;
- splitting the phase-modulated data signal into a first signal path comprising the first data signal and a second signal path comprising the second data signal;
- removing or reducing the modulation format of the first data signal thereby providing a modified first data signal;
- removing or reducing the modulation format of the second data signal thereby providing a modified second data signal; and
- estimating the phase of the phase-modulated data signal based on the modified first and second data signals.

**Patentansprüche**

**1.** Phasenschätzungseinrichtung, die ausgelegt ist zum Schätzen der Phase eines optischen Signals, einschließlich eines phasenmodulierten Datensignals, wobei die Einrichtung umfasst:

- eine elektrische Schnittstelle (110, 210), die ausgelegt ist zum Empfangen einer elektrischen Abbildung besagten phasenmodulierten Datensignals, wobei besagtes phasenmoduliertes Datensignal Supersymbole umfasst, die mindestens zwei Zeitschlitze abdecken, wobei jedes Supersymbol mindestens ein erstes Datensignal einschließt, das moduliert ist mittels eines ersten Phasenmodulationsformats in einem ersten Zeitschlitz, und ein zweites Datensignal, das moduliert ist mittels eines zweiten Phasenmodulationsformats in einem zweiten Zeitschlitz;

wobei besagte Phasenschätzungseinrichtung **gekennzeichnet ist durch**:

- eine Demultiplex-Einheit (120, 220), die ausgelegt ist zum Splitten des modulierten Datensignals in einen ersten Signalpfad (130, 230), umfassend ein erstes Datensignal, und einen zweiten Signalpfad (140, 240), der das zweite Datensignal umfasst;
- eine erste Modulationsbeseitigungs-Einheit (150, 250), eingeschlossen in den ersten Signalpfad (130, 230), und eine zweite Modulationsbeseitigungs-Einheit (160, 260), eingeschlossen in den zweiten Signalpfad (140, 240), wobei besagte erste Modulationsbeseitigungs-Einheit (150, 250) ausgelegt ist zum Beseitigen oder Reduzieren des Modulationsformats des ersten Datensignals unter Bereitstellen eines modifizierten ersten Datensignals, und wobei besagte zweite Modulationsbeseitigungs-Einheit (160, 260) ausgelegt ist zum Beseitigen oder Reduzieren des Modulationsformats des zweiten Datensignals unter Bereitstellen eines modifizierten zweiten Datensignals; und

- eine Phasenschätzungseinheit (170, 270), die ausgelegt ist zum Bereitstellen eines Phasenschätzungssignals für ein Supersymbol auf Grundlage des modifizierten ersten und zweiten Datensignals.

2. Einrichtung nach Anspruch 1, wobei das erste Phasenmodulationsformat binärer Phasenumtastung (Binary Phase-Shift Keying, BPSK) oder ein anderes Phasenmodulationsformat ist, das eine Phasenambiguität von 180° umfasst.

3. Einrichtung nach einem beliebigen der vorhergehenden Ansprüche, wobei das zweite Phasenmodulationsformat Quadratur-Phasenumtastung (Quadrature Phase Shift Keying, QPSK) oder ein anderes Phasenomodulationsformat ist, das eine Phasenambiguität von 90° umfasst.

4. Einrichtung nach einem beliebigen der vorhergehenden Ansprüche, wobei die erste Modulationsbeseitigungs-Einheit (250) Verarbeitungsmittel (251) zum Quadrieren komplexer Daten umfasst, die in dem ersten Datensignal eingeschlossen sind.

5. Einrichtung nach einem beliebigen der vorhergehenden Ansprüche, wobei die zweite Modulationsbeseitigungs-Einheit (260) Verarbeitungsmittel (261) zum Berechnen der vierten Potenz von komplexen Daten, die in dem zweiten Datensignal eingeschlossen sind.

6. Einrichtung nach einem beliebigen der vorhergehenden Ansprüche, wobei der erste und/oder zweite Signalpfad (230, 240) einen Mittelungsfilter (252, 262) einschließt zum Mitteln komplexer Daten, die in dem modifizierten ersten und zweiten Datensignal eingeschlossen sind.

7. Einrichtung nach einem beliebigen der vorhergehenden Ansprüche, wobei der erste Signalpfad (230) eine Anpassungseinheit (253) einschließt, die mit dem Mittelungsfilter (252) des ersten Signalpfads (230) gekoppelt ist, wobei besagte Anpassungseinheit (253) ausgelegt ist zum Einstellen der komplexen Werte der modifizierten ersten Datensignale in Bezug auf die komplexen Werte der modifizierten zweiten Datensignale.

8. Einrichtung nach einem beliebigen der vorhergehenden Ansprüche, umfassend eine Korrektureinheit (290), wobei besagte Korrektureinheit (290) ausgelegt ist zum Empfangen von Phaseninformation komplexer Daten, die in den modifizierten ersten und modifizierten zweiten Datensignalen oder Phaseninformation komplexer Daten eingeschlossen sind, die von besagten modifizierten ersten und modifizierten zweiten Datensignalen geliefert werden, und zum Bestimmen der Phasendifferenz zwischen besagter Phaseninformation und der Phasenänderung der komplexen Daten, die in dem ersten oder zweiten Signalpfad eingeschlossen sind, auf Grundlage besagter Phasendifferenz.

9. Einrichtung nach Anspruch 8, wobei die Korrektureinheit (290) ausgelegt ist zum Runden der Phasendifferenz auf einen Korrekturwinkel $\rho_{comp}$ und Addieren besagten Korrekturwinkels $\rho_{comp}$ zur Phase der komplexen Daten des ersten oder zweiten Signalpfads (230, 240), wobei der Wert des Korrekturwinkels $\rho_{comp}$ definiert ist durch:

$$\rho_{comp} = n \cdot \pi; \; n \in Z;$$

10. Einrichtung nach einem beliebigen der vorhergehenden Ansprüche, wobei der erste und/oder zweite Signalpfad (230, 240) eine Wichtungsentität (271, 272) umfasst, wobei besagte Wichtungsentität (271, 272) ausgelegt ist zum Multiplizieren der komplexen Daten, die in dem entsprechenden Signalpfad eingeschlossen sind, mit einem Wichtungsfaktor (c1, c2).

11. Einrichtung nach einem beliebigen der vorhergehenden Ansprüche, wobei - vor dem Bereitstellen der ersten und zweiten Datensignale für die PhasenschätzungsEinheit (170, 270) - die komplexen Daten, die in den ersten und zweiten Datensignalen eingeschlossen sind, kombiniert oder überlagert werden.

12. Einrichtung nach Anspruch 11, wobei die komplexen Daten, die in den ersten und zweiten Datensignalen eingeschlossen sind, kombiniert oder überlagert werden mittels Addieren der komplexen Daten der ersten und zweiten Datensignale.

13. Optischer Empfänger zum Empfangen optischer Signale, einschließend ein phasenmoduliertes Datensignal, wobei der Empfänger eine Phasenschätzungseinrichtung (100, 200) nach einem beliebigen der vorhergehenden Ansprüche umfasst.

14. Optischer Empfänger nach Anspruch 13, umfassend eine Empfangseinheit, die ausgelegt ist zum Zurückgewinnen von Information, die in Supersymbolen des phasenmodulierten Datensignals eingeschlossen ist, wobei die Empfangseinheit ausgelegt ist zum Zurückgewinnen der Supersymbole auf Grundlage des Phasenschätzungssignals, das von der Phasenschätzungseinrichtung (100, 200) bereitgestellt wird.

15. Verfahren zum Schätzen der Phase eines phasenmodulierten Datensignals, das in einem optischen Signal eingeschlossen ist, wobei das Verfahren die folgenden Schritte umfasst:

- Empfangen einer elektrischen Abbildung eines phasenmodulierten Datensignals, wobei besagtes phasenmoduliertes Datensignal Supersymbole umfasst, die mindestens zwei Zeitschlitze abdecken, wobei jedes Supersymbol mindestens ein erstes Datensignal einschließt, das moduliert ist mittels eines ersten Phasenmodulationsformats in einem ersten Zeitschlitz, und ein zweites Datensignal, das moduliert ist mittels eines zweiten Phasenmodulationsformats in einem zweiten Zeitschlitz;
- Splitten des phasenmodulierten Datensignals in einen ersten Signalpfad, der das erste Datensignal umfasst, und in einen zweiten Signalpfad, der das zweite Datensignal umfasst;
- Entfernen oder Reduzieren des Modulationsformats des ersten Datensignals unter Bereitstellen eines modifizierten ersten Datensignals;
- Entfernen oder Reduzieren des Modulationsformats des zweiten Datensignals unter Bereitstellen eines modifizierten zweiten Datensignals; und
- Schätzen der Phase des phasenmodulierten Datensignals auf Grundlage der modifizierten ersten und zweiten Datensignale.

**Revendications**

1. Appareil d'estimation de phase adapté pour estimer la phase d'un signal optique incluant un signal de données modulé en phase, l'appareil comprenant :

- une interface électrique (110, 210) adaptée pour recevoir une représentation électrique dudit signal de données modulé en phase, ledit signal de données modulé en phase comprenant des super symboles couvrant au moins deux intervalles de temps, chaque super symbole incluant au moins un premier signal de données modulé par un premier type de modulation de phase dans un premier intervalle de temps et un deuxième signal de données modulé par un deuxième type de modulation de phase dans un deuxième intervalle de temps ;

ledit appareil d'estimation de phase étant **caractérisé par** :

- un module de démultiplexage (120, 220) adapté pour diviser le signal de données modulé en phase en un premier trajet de signal (130, 230) comprenant le premier signal de données et un deuxième trajet de signal (140, 240) comprenant le deuxième signal de données ;
- un premier module de suppression de la modulation (150, 250) inclus dans le premier trajet de signal (130, 230) et un deuxième module de suppression de la modulation (160, 260) inclus dans le deuxième trajet de signal (140, 240), ledit premier module de suppression de la modulation (150, 250) étant adapté pour supprimer ou réduire le type de modulation du premier signal de données produisant ainsi un premier signal de données modifié et ledit deuxième module de suppression de la modulation (160, 260) étant adapté pour supprimer ou réduire le type de modulation du deuxième signal de données produisant ainsi un deuxième signal de données modifié ; et
- un module d'estimation de phase (170, 270) adapté pour fournir un signal d'estimation de phase pour un super symbole en fonction des premiers et deuxièmes signaux de données modifiés.

2. Appareil selon la revendication 1, dans lequel le premier type de modulation de phase est une modulation par déplacement de phase bivalente (BPSK) ou un autre type de modulation de phase comprenant une ambiguïté de phase de 180°.

3. Appareil selon l'une quelconque des revendications précédentes, dans lequel le deuxième type de modulation de phase est une modulation par déplacement de phase en quadrature (QPSK) ou un autre type de modulation de phase comprenant une ambiguïté de phase de 90°.

4. Appareil selon l'une quelconque des revendications précédentes, dans lequel le premier module de suppression de la modulation (250) comprend des moyens de traitement (251) destinés à élever au carré les données complexes incluses dans le premier signal de données.

5. Appareil selon l'une quelconque des revendications précédentes, dans lequel le deuxième module de suppression de la modulation (260) comprend des moyens de traitement (261) destinés à calculer la puissance quatre des données complexes incluses dans le deuxième signal de données.

**6.** Appareil selon l'une quelconque des revendications précédentes, dans lequel le premier et/ou le deuxième trajet de signal (230, 240) incluent un filtre de moyenne (252, 262) destiné à calculer la moyenne des données complexes incluses dans les premiers et deuxièmes signaux de données modifiés.

**7.** Appareil selon l'une quelconque des revendications précédentes, dans lequel le premier trajet de signal (230) inclut un module d'adaptation (253) couplé au filtre de moyenne (252) du premier trajet de signal (230), ledit module d'adaptation (253) étant adapté pour ajuster les valeurs complexes des premiers signaux de données modifiés en fonction des valeurs complexes des deuxièmes signaux de données modifiés.

**8.** Appareil selon l'une quelconque des revendications précédentes, comprenant un module de correction (290), ledit module de correction (290) étant adapté pour recevoir des informations de phase des données complexes incluses dans les premiers et deuxièmes signaux de données modifiés ou des informations de phase des données complexes dérivées desdits premiers et deuxièmes signaux de données modifiés, déterminer la différence de phase entre lesdites informations de phase et modifier la phase des données complexes incluses dans le premier ou le deuxième trajet de signal en fonction de ladite différence de phase.

**9.** Appareil selon la revendication 8, dans lequel le module de correction (290) est adapté pour arrondir la différence de phase à un angle de correction $\rho_{comp}$ et ajouter ledit angle de correction $\rho_{comp}$ à la phase des données complexes du premier ou du deuxième trajet de données (230, 240), dans lequel la valeur de l'angle de correction $\rho_{comp}$ est définie par :

$$\rho_{comp} = n \cdot \pi \; ; \; n \, \epsilon \, Z \; ;$$

**10.** Appareil selon l'une quelconque des revendications précédentes, dans lequel le premier et/ou le deuxième trajet de signal (230, 240) comprennent une entité de pondération (271, 272), ladite entité de pondération (271, 272) étant adaptée pour multiplier les données complexes incluses dans le trajet de signal respectif par un facteur de pondération (c1, c2).

**11.** Appareil selon l'une quelconque des revendications précédentes, dans lequel - avant de transmettre les premiers et deuxièmes signaux de données au module d'estimation de phase (170, 270) - les données complexes incluses dans les premiers et deuxièmes signaux de données sont combinées ou superposées.

**12.** Appareil selon la revendication 11, dans lequel les données complexes incluses dans les premiers et deuxièmes signaux de données sont combinées ou superposées en ajoutant les données complexes des premiers et deuxièmes signaux de données.

**13.** Récepteur optique destiné à recevoir des signaux optiques incluant un signal de donnée modulé en phase, le récepteur comprenant un appareil d'estimation de phase (100, 200) selon l'une quelconque des revendications précédentes.

**14.** Récepteur optique selon la revendication 13, comprenant un module de réception adapté pour récupérer les informations incluses dans des super symboles du signal de données modulé en phase, dans lequel le module de réception est adapté pour récupérer les super symboles d'après le signal d'estimation de phase fourni par l'appareil d'estimation de phase (100, 200).

**15.** Procédé d'estimation de la phase d'un signal de données modulé en phase inclus dans un signal optique, le procédé comprenant les étapes suivantes :

- recevoir une représentation électrique d'un signal de données modulé en phase, ledit signal de données modulé en phase comprenant des super symboles couvrant au moins deux intervalles de temps, chaque super symbole incluant au moins un premier signal de données modulé par un premier type de modulation de phase dans un premier intervalle de temps et un deuxième signal de données modulé par un deuxième type de modulation de phase dans un deuxième intervalle de temps ;
- diviser le signal de données modulé en phase en un premier trajet de signal comprenant le premier signal de données et un deuxième trajet de signal comprenant le deuxième signal de données ;
- supprimer ou réduire le type de modulation du premier signal de données, produisant ainsi un premier signal de données modifié ;
- supprimer ou réduire le type de modulation du deuxième signal de données, produisant ainsi un deuxième signal de données modifié ; et
- estimer la phase du signal de données modulé en phase en fonction des premiers et deuxièmes signaux de données modifiés.

QPSK | QPSK | BPSK | BPSK | QPSK | QPSK | BPSK | BPSK

t1 | t2 | t3 | t4 | t1 | t2 | t3 | t4 | t

Supersymbol
1

Supersymbol
2

Fig. 1

QPSK  QPSK  BPSK  BPSK

t1 | t2 | t3 | t4 | t

Supersymbol

Fig. 2

QPSK

$(...)^4$

modulation
format
elimination

Fig. 3

BPSK

$(...)^2$

modulation
format
elimination

Fig. 4

QPSK QPSK BPSK BPSK

t1 t2 t3 t4 t

Supersymbol

Fig. 5

8QAM QPSK QPSK BPSK

t1 t2 t3 t4 t

Supersymbol

Fig. 6

Fig. 7

Fig. 8

**EP 3 089 383 B1**

## REFERENCES CITED IN THE DESCRIPTION

**Patent documents cited in the description**

- EP 2747311 A